# EUROPEAN PATENT APPLICATION

(11) **EP 4 246 872 A1**
(43) Date of publication of application: **20.09.2023**
(21) Application number: 23161719.2
(22) Date of filing: 14.03.2023
(51) Int. Cl.: H04L 9/00, G06F 21/64

(54) **METHOD AND SYSTEM FOR SELECTING A DECENTRALIZED BLOCKCHAIN VALIDATOR OF PROOF OF USE CONSENSUS ALGORITHM**

(30) Priority: 16.03.2022 KR 20220032552
(71) Applicant: Kim, Se Il, Gunpo-si, Gyeonggi-do 15809 (KR); Synaptic Wave Inc., Anyang-si, Gyeonggi-do 14118 (KR)
(72) Inventor: KIM, Se Il, 15809 Gunpo-si, Gyeonggi-do (KR)
(74) Representative: Frenkel, Matthias Alexander

(57) **Abstract**

The present disclosure may provide a method and system for selecting a decentralized blockchain validator of a proof of use consensus algorithm that first verifies the reputation and identity of the node (or validator) participating in block verification in the blockchain using an external service linked to a blockchain oracle and again verifies the reality of the participating nodes through a blockchain service such as a proof of attendance protocol (POAP), and then selects the final validator using two random processes employing a double-blind process, thereby autonomizing and systematizing the selection process of nodes for verifying blocks in the blockchain to secure decentralization, maintain the scalability of proof of authority as well as eliminate centralization, which is a major critical factor.

## Description

### TECHNICAL FIELD

An embodiment of the present disclosure relates to a method and system for selecting a decentralized blockchain validator of a proof of use consensus algorithm.

### DISCUSSION OF RELATED ART

As many people already know, blockchain refers to a decentralized distributed network that provides higher transparency, security, and immutability. However, not many people understand exactly how a blockchain network can maintain its stability without a trusted central authority and how all transactions are verified.

To put it simply, a consensus algorithm is what provides transparency, security, and immutability.

It is a core algorithm that operates on all blockchain protocols, and its role is to direct the system on the procedures necessary to resolve issues such as the Byzantine general's problem in a distributed system, maintain the integrity and security of the entire blockchain network, and produce desired results.

The most common consensus algorithms include proof of work, which is used in many virtual assets such as Bitcoin, proof of stake, which has been recently applied in Ethereum 2.0, and proof of authority, which is used in many private blockchain networks.

In Satoshi Nakamoto's Bitcoin white paper published in 2008, proof of work was introduced for decentralized P2P transactions, and many blockchain projects have since adopted it. Although PoW used in Bitcoin has proven to provide the highest level of security, it reveals scalability issues due to the limitation of transaction processing speed (TPS).

However, the transparency, security, and immutability of blockchain technology itself have the potential to create new value in various forms in real-life applications. As an alternative to the limitations inherent in proof of work, such as transaction processing speed and processing costs, various services using a dedicated blockchain based on proof of authority are being implemented.

On the other hand, even open blockchains such as Ethereum face scalability issues due to the consensus algorithm of proof of work, and efforts are underway to replace it with proof of stake or to test Lightning Network technology as a side chain within the Bitcoin ecosystem. However, there are still no fully validated or expanded real-life services. Consequently, research and development on consensus algorithms that are more efficient and maintain the security of the blockchain continues.

Proof of work, proof of stake, and proof of authority all have their own advantages and disadvantages.

Proof of work allows miners to add new blocks to the blockchain only when the hash they provide is recognized by nodes in the blockchain network. This means that most nodes must reach regular consensus on the mining process, software version in use, and the validity of transactions. Although this is a very effective system for verifying distributed data, it has recently received much criticism because it requires massive amounts of power and computer resources during the mining process.

One of the consensus algorithms that is expected to replace such a proof of work is proof of stake. In a proof of stake system, miners are replaced by validators. proof of stake does not require mining, and there is no competition to measure hashes. Instead, users are randomly selected and, if chosen, must present (or form) a block. Validators receive rewards composed of blockchain transaction fees if the block is valid.

Proof of stake has several advantages over proof of work. The most notable is that it has a lower carbon footprint because it does not require large amounts of energy-consuming mining farms. the power consumed by proof of stake is only a small fraction of that used by proof of work. However, the staking concept used in proof of stake has inherent problems, such as only a few large virtual asset holders receiving rewards, and efforts are being made to overcome these limitations, such as delegated proof of stake.

In addition, most private blockchain networks use proof of authority consensus algorithms based on reputation. This can be seen as a practical and effective alternative that solves the scalability issues of proof of work and proof of stake.

The proof of work algorithm is the safest and most reliable among existing algorithms, but it does not have good scalability. Proof of work based blockchains, not just bitcoin, show limited transactions per second. This limitation is related to the fact that proof of work (PoW) based blockchains rely on distributed network nodes to reach consensus and agreement on the current state of the blockchain. in other words, to approve a new transaction block through the proof of work algorithm, it must go through verification and agreement by most of the blockchain network nodes. Therefore, while proof of work based blockchains provide a decentralized and secure economic system, their decentralized nature has inherent limitations for large-scale use.

Meanwhile, when looking at the transaction speed per second, the proof of stake blockchain is generally superior to Bitcoin, which uses proof of work, but the difference is not significant, and the reality is that blockchain networks applying proof of stake have not actually solved the scalability issues of proof of work based blockchains.

On the other hand, proof of authority is being presented as a more effective alternative because it can process many more transactions per second, but it is criticized for giving up decentralization. In other words, although the proof of authority algorithm is superior in terms of throughput and scalability, it is evaluated as merely an effort to create a more centralized system that can easily censor or blacklist.

In addition, both proof of work and proof of stake have vulnerabilities that can be exposed to a so-called 51% attack in terms of structural security.

In the proof of work system of Bitcoin, the mining process involves a huge amount of electricity and computer resources, and the performance of miners is based on their own computer power, which is usually referred to as hash power or hash rate. There are many mining nodes distributed globally, and they compete to find valid block hashes and receive newly created Bitcoin as a reward.

In this context, mining power is physically distributed across various nodes, meaning that hash rates are not owned by a single entity. However, if hash rates are not sufficiently decentralized, for example, if a single entity or organization possesses more than 50% of the hash power, that entity or organization with such hash power can own the network and make ledger modifications for its own benefit. This can result in what is called a 51% attack, also known as a majority attack.

In the case of proof of stake, if a single entity or organization secures more than 50% of the stake, a 51% attack can occur. Of course, it is virtually impossible for an attacker to gain more computing power or stake than more than half of the remaining blockchain network, but it is not a difficult task for relatively small-scale cryptocurrencies. Some notable cryptocurrencies that have fallen victim to a 51% attacks include Monacoin, Bitcoin Gold, and ZenCash, among others.

### SUMMARY

An embodiment of the present disclosure relates to a proof of use including a process of granting decentralization to a proof of authority which is superior in scalability and transaction processing speed compared to proof of work or proof of stake. In other words, the present disclosure may provide a method and system for selecting a decentralized blockchain validator of a proof of use consensus algorithm that first verifies the reputation and identity of the node (or validator) participating in block verification in the blockchain using an external service linked to a blockchain oracle and again verifies the reality of the participating nodes through a blockchain service such as a proof of attendance protocol (POAP), and then selects the final validator using two random processes employing a double-blind process, thereby autonomizing and systematizing the selection process of nodes for verifying blocks in the blockchain to secure decentralization while maintaining the scalability of proof of authority as well as eliminate centralization issue, which is a major critical factor.

The method for selecting a decentralized blockchain validator of proof of use consensus algorithm according to an embodiment of the present disclosure comprises a validator precandidate selection step for selecting a business operator whose identity has been confirmed through an external service system linked to a blockchain oracle as a validator precandidate; a proof of attendance issuance step for issuing a certificate of attendance to a user by the business operator identified through an access right management system; a validator candidate group selection step for forming a validator candidate group by selecting a validator candidate from among the validator precandidate that satisfies a predefined issuance condition based on an issuance history of the certificate of attendance; and a proof of use final validator selection step for selecting a final validator from the validator precandidate included in the validator candidate group using a predefined random selection protocol.

Further, the proof of attendance issuance step may confirm that the access right management system of the workplace operated by the validator precandidate has issued the access key to the user, issue a certificate of attendance to the user of the business site through blockchain service including proof of attendance protocol, and record the history of validator candidate issuing the proof of attendance to the user on the blockchain network.

Further, the method may further comprise, after the proof of attendance issuance step, certificate of attendance hash-tagging step for hash-tagging the certificate of attendance in at least one of a travel photo, a video, and a user review registered in the social network service (SNS) of the business site's user.

Further, the validator candidate selection step may form the validator candidate group by randomly selecting k validator precandidates among the validator precandidates that have issued the certificate of attendance more than preset m times during a preset time period.

Further, the number (k) of validator precandidates included in the validator candidate group and the number (m) of issuance of the certificate of attendance included in the issuance condition, respectively, may be changed to increase or decrease in proportion to the total number of validator precandidates.

Further, the proof of use final validator selection step may select the final validator using a predefined high-entropy random selection protocol.

Further, the validator candidate group selection step may grant the validator candidate authority only for a preset time to the validator candidate group and lose the validator candidate authority after the time elapses.

The system for selecting a decentralized blockchain validator of proof of use consensus algorithm according to another embodiment of the present disclosure comprises a validator precandidate selecting unit configured to select a business whose identity has been confirmed through an external service system linked to a blockchain oracle as a validator precandidate, a proof of attendance issuing unit configured to issue a certificate of attendance to a user by the business operator identified through an access right management system, a validator candidate group selecting unit configured to form a validator candidate group by selecting a validator candidate from among the validator precandidate that satisfies a predefined issuance condition based on an issuance history of the certificate of attendance, and a proof of use final validator selecting unit configured to select a final validator from the validator precandidate included in the validator candidate group using a predefined random selection protocol.

Further, the proof of attendance issuing unit may confirm that the access right management system of the workplace operated by the validator precandidate has issued the access key to the user, issue a certificate of attendance to the user of the business site through blockchain service including proof of attendance protocol, and record the history of validator candidate issuing the proof of attendance to the user on the blockchain network.

Further, the system may further comprise certificate of attendance hash-tagging unit configured to hash-tag the certificate of attendance in at least one of a travel photo, a video, and a user review registered in the social network service (SNS) of the business place's user.

Further, the validator candidate group selecting unit may be configured to form the validator candidate group by randomly selecting k validator precandidates among the validator precandidates that have issued the certificate of attendance more than preset m times during a preset time period.

Further, the number (k) of validator precandidates included in the validator candidate group and the number (m) of issuance of the certificate of attendance included in the issuance condition, respectively, may be changed to increase or decrease in proportion to the total number of validator precandidates.

Further, the proof of use final validator selecting unit may select the final validator using a predefined high-entropy random selection protocol.

Further, the validator candidate group selecting unit may be configured to grant the validator candidate authority only for a preset time to the validator candidate group and lose the validator candidate authority after the time elapses.

The present disclosure may provide a method and system for selecting a decentralized blockchain validator of a proof of use consensus algorithm that first verifies the reputation and identity of the node (or validator) participating in block verification in the blockchain using an external service linked to a blockchain oracle and again verifies the reality of the participating nodes through a blockchain service such as a proof of attendance protocol, and then selects the final validator using two random processes employing a double-blind process, thereby autonomizing and systematizing the selection process of nodes for verifying blocks in the blockchain to secure decentralization, maintain the scalability of proof of authority as well as eliminate centralization, which is a major critical factor.

### BRIEF DESCRIPTION OF THE DRAWINGS

A more complete appreciation of the present disclosure and many of the attendant aspects thereof will be readily obtained as the same becomes better understood by reference to the following detailed description when considered in connection with the accompanying drawings, wherein:
FIG. 1 is a schematic view for showing the overall flow of a method for selecting a decentralized blockchain validator of proof of use consensus algorithm according to an embodiment of the present disclosure;
FIG. 2 is a schematic view for showing the step configuration of a method for selecting a decentralized blockchain validator of proof of use consensus algorithm according to an embodiment of the present disclosure;
FIG. 3 is a view for explaining a method for selecting a validator precandidate according to an embodiment of the present disclosure;
FIG. 4 is a view for showing the configuration of a blockchain network package to be downloaded from an accommodation for the operation according to an embodiment of the present disclosure;
FIG. 5 is a view for showing the concept of issuing a proof of attendance and forming a validator candidate group according to an embodiment of the present disclosure;
FIG. 6 is a view for showing a certificate of attendance as an example of a certificate of attendance according to an embodiment of the present disclosure;
FIG. 7 is a view for explaining a method for selecting a final validator in a proof of use consensus algorithm according to an embodiment of the present disclosure;
FIG. 8 is a schematic view for showing the overall operation flow of a method for selecting a decentralized blockchain validator of proof of use consensus algorithm according to another embodiment of the present disclosure; and
FIG. 9 is a schematic view for showing the overall configuration of a method for selecting a decentralized blockchain validator of proof of use consensus algorithm according to another embodiment of the present disclosure.

### DETAILED DESCRIPTION OF EXEMPLARY EMBODIMENTS

The terms used in this specification will be briefly described, and the present disclosure is described in detail.

The terms used in the present disclosure have been selected from general terms that are currently widely used as much as possible while considering the functions in the present disclosure, but these may vary depending on the intention of a person skilled in the art or precedent, the emergence of new technologies, and the like. In a specific case, there is also a term arbitrarily selected by the applicant, and in this case, the meaning will be described in detail in the description of the invention. Therefore, the term used in the present disclosure should be defined based on the meaning of the term and the overall content of the present disclosure, not simply the name of the term.

When it is said that a certain part "includes" a certain component throughout the specification, it means that it may further include other components, not excluding other components unless otherwise stated. Further, terms such as "...unit" and "module" described in the specification mean a unit that processes at least one function or operation, which may be implemented as hardware or software or a combination of hardware and software.

Hereinafter, with reference to the accompanying drawings, embodiments of the present disclosure will be described in detail so that those skilled in the art can easily carry out the present disclosure. However, the present disclosure may be embodied in many different forms and is not limited to the embodiments described herein. In order to clearly describe the present disclosure in the drawings, parts irrelevant to the description are excluded, and similar reference numerals are assigned to similar parts throughout the specification.

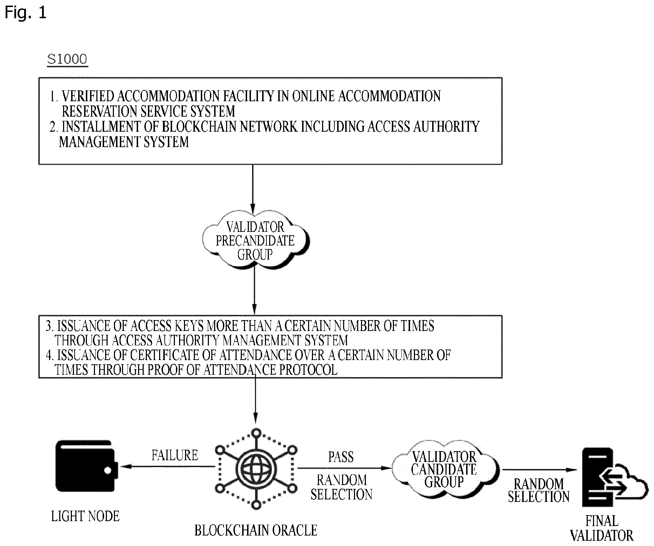

Referring to FIG. 1, in the method for selecting a decentralized blockchain validator of proof of use consensus algorithm S1000 according to an embodiment of the present disclosure, the proof of use must satisfy the following basic conditions.

First, it is necessary to select a validator precandidate for accommodations whose identity has been verified through an online accommodation reservation service system (for example. Expedia, Booking.com, etc.).

Second, it is necessary to install the blockchain network package including the access right management system.

Third, it is necessary to form a validator candidate group from validator precandidates that have issued access keys more than a certain number of times through the access right management system.

Fourth, it is necessary to form a validator candidate group from validator precandidates that have issued certificates of attendance more than a certain number of times through blockchain services such as proof of attendance protocol.

In a blockchain network to which the method for selecting a decentralized blockchain validator of proof of use consensus algorithm S1000 according to an embodiment of the present disclosure is applied, in order to avoid centralization of the process of selecting a validator, among the business operators participating in the field where the blockchain network is applied, any business operator who passes only certain identification checks can become a validator precandidate, among these validator precandidates, the final validator is selected through an autonomous system, and in this process, objectivity for the final validator selection is secured by adopting a double-blind process to exclude subjective bias. That is, a plurality of validator candidates are randomly selected from among validator precandidates that have passed certain criteria, and then a final validator is randomly selected from among the validator candidates.

Hereinafter, the method for selecting a decentralized blockchain validator based on the basic conditions for implementing the proof of use consensus algorithm is described in more detail.

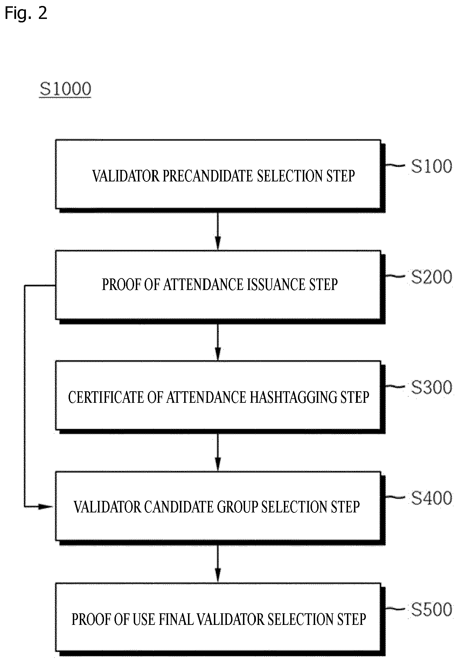

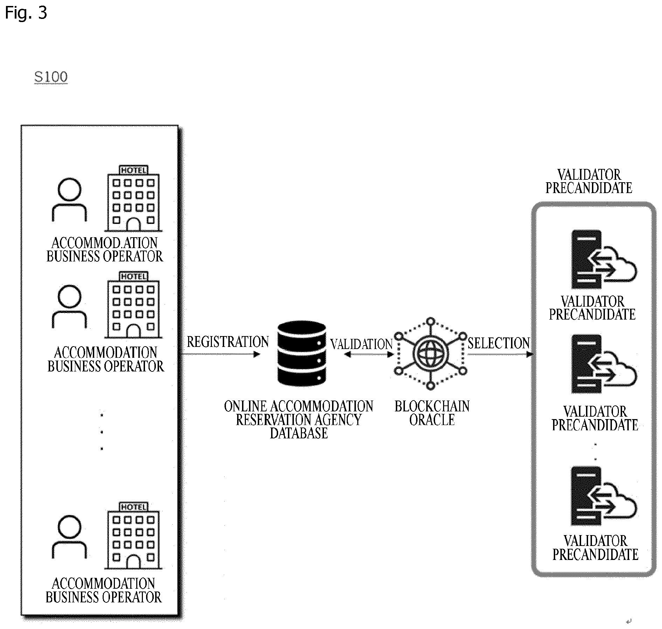

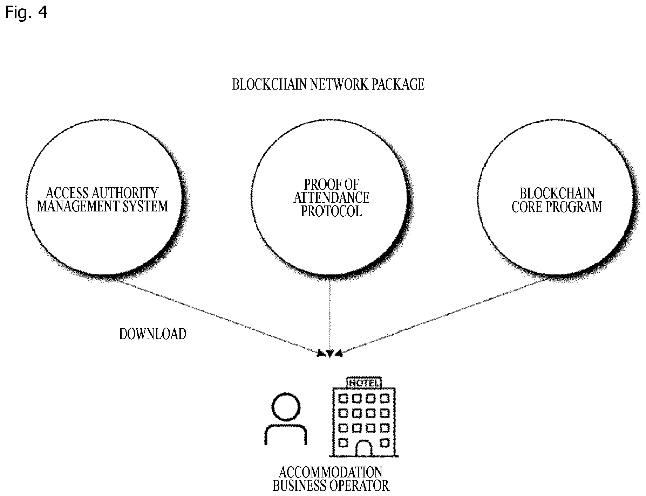

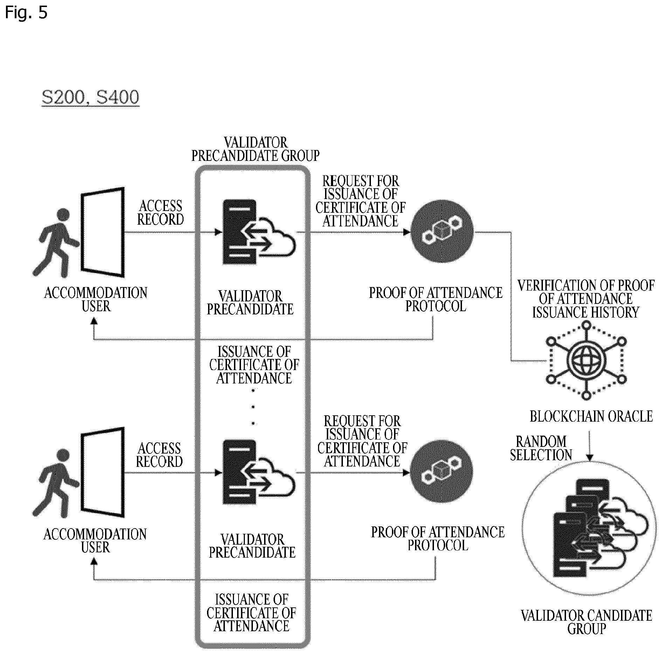

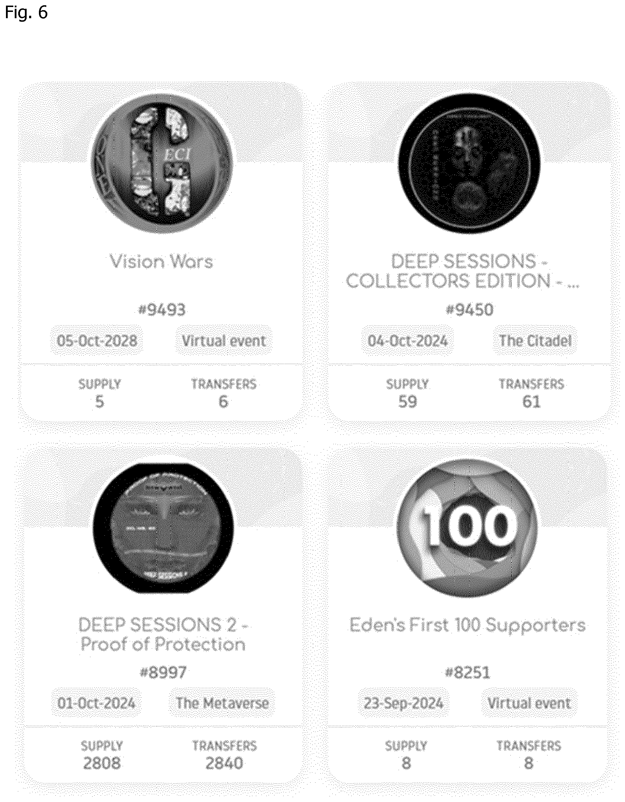

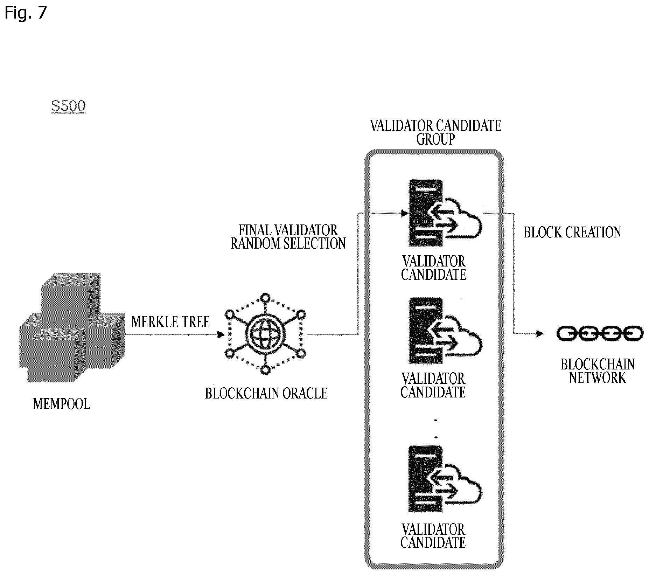

FIG. 2 is a schematic view for showing the step configuration of a method for selecting a decentralized blockchain validator of proof of use consensus algorithm according to an embodiment of the present disclosure, FIG. 3 is a view for explaining a method for selecting a validator precandidate according to an embodiment of the present disclosure, FIG. 4 is a view for showing the configuration of a blockchain network package to be downloaded from an accommodation for the operation according to an embodiment of the present disclosure, FIG. 5 is a view for showing the concept of issuing a proof of attendance and forming a validator candidate group according to an embodiment of the present disclosure, FIG. 6 is a view for showing a certificate of attendance as an example of a certificate of attendance according to an embodiment of the present disclosure, and FIG. 7 is a view for explaining a method for selecting a final validator in a proof of use consensus algorithm according to an embodiment of the present disclosure.

Referring to FIG. 2, the method for selecting a decentralized blockchain validator of proof of use consensus algorithm S1000 according to an embodiment of the present disclosure may comprise at least one of a validator precandidate selection step S100, a proof of attendance issuance step S200, a certificate of attendance hashtagging step S300, a validator candidate group selection step S400, and a proof of use final validator selection step S500.

Referring to FIG. 3, in the validator precandidate selection step S100, a business operator whose identity has been verified through an external service linked to a blockchain oracle may be selected as a validator precandidate. The blockchain network of the present embodiment may primarily select accommodations engaged in the travel industry as precandidates that can become validators in order to ensure the certainty of the validator's identity. For example, if the operating partner of the blockchain network is a company that provides an online accommodation reservation service, the actual information of the hotel held by the company is used to select an accommodation (accommodation business operator) registered in the relevant online accommodation reservation service system as a validator precandidate. At this time, minimum practical identity verification is performed through the network of the corresponding company.

Then, as shown in FIG. 4, among the accommodation business operators whose identification has been completed, accommodation business operators, who want to become a validator, preferably download and install a blockchain network package including a blockchain service program such as an access right management system and a proof of attendance protocol, or a blockchain core program in each accommodation system.

As shown in FIG. 5, in the proof of attendance issuance step S200, a certificate of attendance may be issued to the accommodation user confirmed through the access right management system of the accommodations. More specifically, in the proof of attendance issuance step S200, the access right management system operated by the validator precandidate may verify that the access key has been issued to the accommodation user, issues a certificate of attendance to the accommodation user through a blockchain service such as the proof of attendance protocol, and record the history of validator candidate issuing the proof of attendance to the user on the blockchain network.

The proof of attendance refers to a new way of reliably recording and preserving life experiences. For example, when an individual attends an event, that individual is issued a certificate in the form of a unique and non-replicable non-fungible token (NFT) as a cryptographic record. In other words, providing irrefutable evidence that an individual has attended an event or been active in a particular place is one of its core values. This proof of attendance was first introduced at the Ethereum Denver Convention in 2019. Since 2020, 'xDai', a side chain of Ethereum, has been issued with the 'ERC-721' standard used for issuing NFTs.

The blockchain network may include its own proof of attendance protocol, so a validator precandidate that wants to participate in the verification process may issue a proof of attendance while performing a function of issuing access keys to accommodation users. Based on the history of proof of attendance issuance, it can be confirmed that the validator precandidate actually exists and is performing practical and economic activities that exceed the predefined scale required as a validator.

In the certificate of attendance hashtagging step S300, the certificate of attendance issued in the proof of attendance issuance step S200 may be hashtagged on travel photos and videos, user reviews, and the like registered on the SNS of the accommodation user. Accommodation users according to the present embodiment may use the certificate of attendance issued through a blockchain service such as the proof of attendance protocol of a blockchain network to make bookmarks of happy moments in life or to hashtag it on photos and videos that are memories of travel, thereby conveniently managing their records and allowing travel review writers (accommodation users) to be confirmed that they actually went to the destination. The certificate of attendance hashtagging step S300 according to the present embodiment may be implemented in any step between, before, and after the validator candidate group selection step S400 and the final validator selection S500 after the proof of attendance issuance step S200.

As shown in FIG. 5, in the validator candidate group selection step S400, validator candidates may be randomly selected among the validator precandidates that meet predefined issuance conditions based on the proof of attendance issuance history recorded through the proof of attendance issuance step S200, thereby forming a validator candidate group. In this case, the blockchain oracle may select validator precandidates that meet predefined conditions among validator precandidates whose identities have been verified, and randomly selects a predefined number of validator precandidates from among them to form a validator candidate group.

More specifically, in the validator candidate group selection step S400, k validator precandidates may be randomly selected among the validator precandidates that have issued certificates of attendance more than m times during a preset time period, thereby forming a validator candidate group. For example, validator precandidates who issued certificates of attendance more than 10 times in a 24-hour period may be first selected, and 100 precandidates are randomly selected among the validator precandidates, thereby forming a validator candidate group.

However, the number (k) of validator precandidates included in the validator candidate group and the number (m) of issuance of the certificate of attendance included in the issuance condition, respectively, may be changed to increase or decrease in proportion to the total number of validator precandidates. In other words, the number of candidates included in the validator candidate group predefined in the blockchain oracle and the certificate of attendance issuance criteria can increase or decrease in proportion to the total number of validator precandidates. Accordingly, the security and stability of the entire blockchain network can increase exponentially as the number of participating precandidates increases, and vice versa, security can be maintained at an appropriate level or higher.

In this case, the blockchain oracle may serve as a smart contract that has external information and may act as a bridge between the blockchain and the outside. In other words, the blockchain oracle itself is not a data material, but can serve as a layer that requests, verifies, proves, and delivers the information to external data.

As shown in FIG. 6, the certificate of attendance may be issued through a blockchain service such as a proof of attendance protocol by connecting a specific date and time and an image related thereto.

Meanwhile, in the validator candidate group selection step S400, the validator candidate authority may be granted to the validator candidate group only for a preset time period, and the validator candidate authority may be lost after the corresponding time period has elapsed. Candidates included in the randomly selected validator candidate group have the possibility of being selected as the final validator with the authority of validator candidates only for a limited time (for example, 24 hours), even though they can be randomly selected as the final validator.

As shown in FIG. 7, in the proof of use final validator selection step S500, a final validator may be selected from among validator precandidates included in the validator candidate group using a predefined random selection protocol. More specifically, in the proof of use final validator selection step S500, a final validator may be selected by excluding central intervention using a predefined random selection protocol with high entropy. Through this selection process, the problem of fairness of proof of authority caused by the validator being disclosed in advance is solved, the action of one participant is not known to other participants, as well as the result of the selection cannot be confirmed by other participants. Furthermore, it is possible not to know whether such selection has occurred.

As described above, to summarize the proof of use method from the security point of view, the first validator precandidate selection process is verified through the online accommodation reservation service system and registered online, and it is only for accommodations that are actually making reservations, thereby blocking malicious validators in advance, and it is necessary to prove that they are currently developing a practical business by issuing a certificate of attendance through a blockchain service such as a proof of attendance protocol for validator precandidates who can access the access right management system through prior verification. Thereafter, they must pass through two random selection processes such as the validator candidate group selection step S400 and proof of use final validator selection step S500 so that they can be selected as the final validator. Therefore, the possibility of a malicious validator being selected virtually converges to zero.

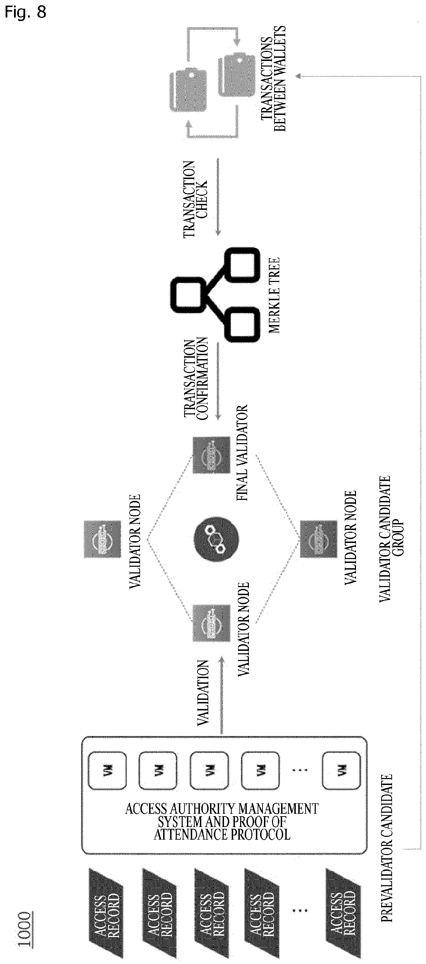

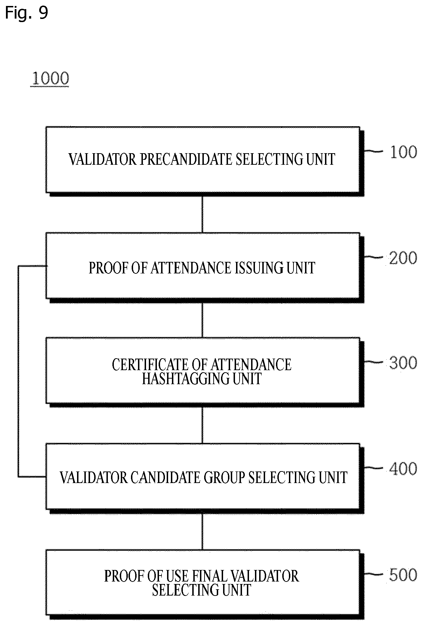

FIG. 8 is a schematic view for showing the overall operation flow of a method for selecting a decentralized blockchain validator of proof of use consensus algorithm according to another embodiment of the present disclosure, and FIG. 9 is a schematic view for showing the overall configuration of a method for selecting a decentralized blockchain validator of proof of use consensus algorithm according to another embodiment of the present disclosure.

Referring to FIGS. 8 and 9, the system for selecting a decentralized blockchain validator of proof of use consensus algorithm 1000 according to an embodiment of the present disclosure may comprise at least one of a validator precandidate selecting unit 100, a proof of attendance issuing unit 200, an NFT certificate of attendance hashtagging unit 300, a validator candidate group selecting unit, and a proof of use final validator selecting unit 500.

Referring to FIG. 3, the validator precandidate selecting unit 100 may select a business operator whose identity has been verified through an external service linked to a blockchain oracle as a validator precandidate. The blockchain network of the present embodiment may first select accommodations engaged in the travel industry as precandidates that may be validators in order to ensure the certainty of the validator's identity. For example, if the operating partner of the blockchain network is a company that provides an online accommodation reservation service, an accommodation (accommodation business operator) registered in the relevant online accommodation reservation service system may be selected as a validator precandidate. At this time, minimum practical identity verification is performed through the network of the corresponding company.

Then, as shown in FIG. 4, among the accommodation business operators whose identification has been completed, accommodation business operators, who want to become a validator, preferably download and install a blockchain network package including a blockchain services program such as an access right management system and a proof of attendance protocol, or a blockchain core program in each accommodation system.

As shown in FIG. 5, the proof of attendance issuing unit 200 may issue a certificate of attendance to the accommodation user confirmed through the access right management system of the accommodations. More specifically, the proof of attendance issuing unit 200 may confirm that the access right management system operated by the validator precandidate has been issued the access key to the accommodation user, issue a certificate of attendance to the accommodation user through a blockchain service such as the proof of attendance protocol, and record the history of validator candidate issuing the proof of attendance to the user on the blockchain network.

The proof of attendance refers to a new way of reliably recording and preserving life experiences. For example, when an individual attends an event, that individual is issued a certificate in the form of a unique and irreproducible NFT as a cryptographic record. In other words, providing irrefutable evidence that an individual has attended an event or been active in a particular place is one of its core values. This proof of attendance was first introduced at the Ethereum Denver Convention in 2019. Since 2020, 'xDai,' a side chain of Ethereum, has been issued with the 'ERC-721' standard used for issuing NFTs.

The blockchain network may include its own proof of attendance protocol, so a validator precandidate that wants to participate in the verification process may issue a proof of attendance while performing a function of issuing access keys to accommodation users. Based on the history of proof of attendance issuance, it can be confirmed that the validator precandidate actually exists and is performing practical and economic activities that exceed the predefined scale required as a validator.

The certificate of attendance hashtagging unit 300 may hashtag the certificate of attendance issued in the proof of attendance issuing unit 200 on travel photos and videos, user reviews, and the like registered on the SNS of the accommodation user. Accommodation users according to the present embodiment may use the certificate of attendance issued through a blockchain service such as the proof of attendance protocol of a blockchain network to make bookmarks of happy moments in life or to hashtag it on photos and videos that are memories of travel, thereby conveniently managing their records and allowing travel review writers (accommodation users) to be confirmed that they actually went to the destination. The certificate of attendance hashtagging unit 300 according to the present embodiment may be implemented in any position between, before, and after the validator candidate group selecting unit 400 and the final validator selecting unit 500 after the proof of attendance issuing unit 200.

As shown in FIG. 5, the validator candidate group selecting unit 400 may randomly select validator candidates among the validator precandidates that meet predefined issuance conditions based on the proof of attendance issuance history recorded through the proof of attendance issuing unit 200, thereby forming a validator candidate group. In this case, the blockchain oracle may select validator precandidates that meet predefined conditions among validator precandidates whose identities have been verified, and randomly selects a predefined number of validator precandidates from among them, and they may be raised to a validator candidate group.

More specifically, the validator candidate group selecting unit 400 may randomly select k validator precandidates among the validator precandidates that have issued certificates of attendance more than m times during a preset time period, thereby forming a validator candidate group. For example, validator precandidates who issued certificates of attendance more than 10 times in a 24-hour period may be first selected, and 100 precandidates are randomly selected among the validator precandidates, thereby forming a validator candidate group.

However, the number (k) of validator precandidates included in the validator candidate group and the number (m) of issuance of the certificate of attendance included in the issuance condition, respectively, may be changed to increase or decrease in proportion to the total number of validator precandidates. In other words, the number of candidates included in the validator candidate group predefined in the blockchain oracle and the certificate of attendance issuance criteria can increase or decrease in proportion to the total number of validator precandidates. Accordingly, the security and stability of the entire blockchain network can increase exponentially as the number of participating precandidates increases, and vice versa, security can be maintained at an appropriate level or higher.

In this case, the blockchain oracle is a service that provides smart contracts with external information and may act as a bridge between the blockchain and the outside. In other words, the blockchain oracle itself is not a data material, but can serve as a layer that requests, verifies, proves, and delivers the information to external data.

As shown in FIG. 6, the certificate of attendance may be issued through a blockchain service such as a proof of attendance protocol by connecting a specific date and time and an image related thereto.

Meanwhile, the validator candidate group selecting unit 400 may grant the validator candidate authority to the validator candidate group only for a preset time period and may lose the validator candidate authority after the corresponding time period has elapsed. Candidates included in the validator candidate group have the possibility of being the final validator with the authority of validator candidates only for a limited time (for example, 24 hours), even though they can be randomly selected as the final validator.

As shown in FIG. 7, the proof of use final validator selecting unit 500 may select a final validator from among validator precandidates included in the validator candidate group using a predefined random selection protocol. More specifically, the proof of use final validator selecting unit 500 may select a final validator by excluding central intervention using a predefined random selection protocol with high entropy. Through this selection process, in order to solve the problem of fairness of proof of authority caused by the validator being disclosed in advance, the action of one participant is not known to other participants, and the result of the selection cannot be verified by other participants. Furthermore, it is possible not to know whether such selection has occurred.

As described above, to summarize the proof of use system from the security point of view, the first validator precandidate selection process is verified through the online accommodation reservation service system and registered online, and it is only for accommodations that are actually making reservations, thereby blocking malicious validators in advance. It is necessary to prove that they are currently developing a practical business by issuing a certificate of attendance through a blockchain service such as a proof of attendance protocol for validator precandidates who can access the access right management system through prior verification. Thereafter, they must pass through two random selection processes such as the validator candidate group selection step S400 and the final validator selection step S500 so that they can be selected as the final validator. Therefore, the possibility of a malicious validator being selected virtually converges to zero.

As such, the proof of use consensus algorithm according to the present embodiment may secure network safety by blocking the access of malicious validators in advance with a multi-layer structure of validator screening and selection process, and time limit.

It should be noted that the access control of accommodation business operators constitutes the basis of a very important business. If the validator attempts to attack the network with malicious intent, access to the access right management system may be blocked, resulting in enormous damage to the normal operation of the business. This is similar to requiring economic costs, that is, consumption of energy and resources required for mining, in order to deter malicious actors in Bitcoin using proof of work. Unlike Bitcoin, a blockchain network using a proof of use consensus algorithm may deter malicious actors by requiring the validator's reputation and business risk at an economic cost. Further, the proof of use consensus algorithm is only possible when all validator precandidates are secured in order to structurally dominate the entire network. It can be seen that the economic cost is very large compared to the cost to secure a 51% hash rate in the proof of work, so there is virtually no economic incentive for malicious actors to attack the network.

The above description is only for one embodiment for implementing the method and system for selecting a decentralized blockchain validator for proof of use consensus algorithm according to the present disclosure. The present disclosure is not limited to the above embodiment. As claimed in the claims below, it is understood that the technical spirit of the present disclosure exists to the extent that various changes can be made by those skilled in the art without departing from the gist of the present disclosure.

## Claims

1. A method for selecting a decentralized blockchain validator for proof of use consensus algorithm, the method comprising:
a validator precandidate selection step for selecting a business operator whose identity has been confirmed through an external service system linked to a blockchain oracle as a validator precandidate;
a proof of attendance issuance step for issuing a certificate of attendance to a user by the business operator identified through an access right management system;
a validator candidate group selection step for forming a validator candidate group by selecting a validator candidate from among the validator precandidate that satisfies a predefined issuance condition based on an issuance history of the certificate of attendance; and
a proof of use final validator selection step for selecting a final validator from the validator precandidate included in the validator candidate group using a predefined random selection protocol.

2. The method of claim 1, wherein the proof of attendance issuance step confirms that the access right management system of the workplace operated by the validator precandidate has issued the access key to the user,
issues a certificate of attendance to the user of the business site through blockchain service including proof of attendance protocol, and
records the history of validator candidate issuing the proof of attendance to the user on the blockchain network.

3. The method of claim 1 or 2, further comprising, after the proof of attendance issuance step, certificate of attendance hash-tagging step for hash-tagging the certificate of attendance in at least one of a travel photo, a video, and a user review registered in the social network service (SNS) of the business place's user.

4. The method of any one of claims 1 to 3, wherein the validator candidate selection step forms the validator candidate group by randomly selecting k validator precandidates among the validator precandidates that have issued the certificate of attendance more than preset m times during a preset time period.

5. The method of claim 4, wherein the number (k) of validator precandidates included in the validator candidate group and the number (m) of issuance of the certificate of attendance included in the issuance condition, respectively, are changed to increase or decrease in proportion to the total number of validator precandidates.

6. The method of any one of claims 1 to 5, wherein the proof of use final validator selection step selects the final validator using a predefined high-entropy random selection protocol.

7. The method of any one of claims 1 to 6, wherein the validator candidate group selection step grants the validator candidate authority only for a preset time to the validator candidate group and loses the validator candidate authority after the time elapses.

8. A system for selecting a decentralized blockchain validator for proof of use consensus algorithm, the system comprising:
a validator precandidate selecting unit configured to select a business whose identity has been confirmed through an external service system linked to a blockchain oracle as a validator precandidate;
a proof of attendance issuing unit configured to issue a certificate of attendance to a user by the business operator identified through an access right management system;
a validator candidate group selecting unit configured to form a validator candidate group by selecting a validator candidate from among the validator precandidate that satisfies a predefined issuance condition based on an issuance history of the certificate of attendance; and
a proof of use final validator selecting unit configured to select a final validator from the validator precandidate included in the validator candidate group using a predefined random selection protocol.

9. The system of claim 8, wherein the proof of attendance issuing unit is configured to confirm that the access right management system of the workplace operated by the validator precandidate has issued the access key to the user,
issue a certificate of attendance to the user of the business site through blockchain service including proof of attendance protocol, and
record the history of validator candidate issuing the proof of attendance to the user on the blockchain network.

10. The system of claim 8 or 9, further comprising a certificate of attendance hash-tagging unit configured to hash-tag the certificate of attendance in at least one of a travel photo, a video, and a user review registered in the SNS of the business place's user.

11. The system of any one of claims 8 to 10, wherein the validator candidate group selecting unit is configured to form the validator candidate group by randomly selecting k validator precandidates among the validator precandidates that have issued the certificate of attendance more than preset m times during a preset time period.

12. The system of claim 11, wherein the number (k) of validator precandidates included in the validator candidate group and the number (m) of issuance of the certificate of attendance included in the issuance condition, respectively, are changed to increase or decrease in proportion to the total number of validator precandidates.

13. The system of any one of claims 8 to 12, wherein the proof of use final validator selecting unit is configured to select the final validator using a predefined high-entropy random selection protocol.

14. The system of any one of claims 8 to 13, wherein the validator candidate group selecting unit is configured to grant the validator candidate authority only for a preset time to the validator candidate group and lose the validator candidate authority after the time elapses.
